# EUROPEAN PATENT APPLICATION

(11) **EP 3 846 245 A1**
(43) Date of publication of application: **07.07.2021**
(21) Application number: 19855799.3
(22) Date of filing: 23.05.2019
(51) Int. Cl.: H01M 2/14

(54) **COATING LIQUID FOR USE IN LITHIUM ION BATTERY, LITHIUM ION BATTERY SEPARATOR, AND LITHIUM ION BATTERY**

(30) Priority: 28.08.2018 CN 201810988377; 28.08.2018 CN 201810988360; 28.08.2018 CN 201810988378; 31.08.2018 CN 201811014090; 31.08.2018 CN 201811012528; 31.08.2018 CN 201811015292
(71) Applicant: Shenzhen Senior Technology Material Co., Ltd., Shenzhen, Guangdong 518106 (CN); Jiangsu Senior New Material Technology Co., Ltd, Changzhou, Jiangsu 213100 (CN)
(72) Inventor: WANG, Yanjie, Shenzhen, Guangdong 518106 (CN); WU, Zhijie, Shenzhen, Guangdong 518106 (CN); TAN, Bin, Shenzhen, Guangdong 518106 (CN); CHEN, Li, Shenzhen, Guangdong 518106 (CN)
(74) Representative: Locas, Davide
(86) International application number: PCT/CN2019/088088
(87) International publication number: WO 2020/042684

(57) **Abstract**

Disclosed are a coating liquid of a lithium ion battery separator, a lithium ion battery separator, and a lithium ion battery. The raw materials of the coating liquid comprise a nanowire, ceramic powder, an adhesive, and a solvent; the nanowire is at least one of nano cellulose, carbon nanotube, silver nanowire, boron carbide nanowire, copper hydroxide nanowire, aramid nano fiber, silicon monoxide nanowire, and hydroxyapatite nanowire; the diameter of the nanowire is 1-100nm, and the length is 0.1-100µm. The lithium ion battery separator consisting of a separator body and a coating layer loaded on the separator body is obtained by applying the coating liquid that is obtained by mixing the nanowire, the ceramic powder, the adhesive and the like onto the surface of the separator body, and performing curing; the lithium ion battery has good thermal stability and puncture resistance, etc.

## Description

### Cross-reference to Related Application

The present disclosure claims the priority to the Chinese patent application with the filing No. 201810988378.5, filed on August 28, 2018 with the Chinese Patent Office, entitled "Coating Liquid for Use in Lithium Ion Battery, Lithium Ion Battery Separator, and Lithium Ion Battery", the Chinese patent application with the filing No. 201810988360.5, filed on August 28, 2018 with the Chinese Patent Office, entitled "Coating Liquid for Use in Lithium Ion Battery, Lithium Ion Battery Separator, and Lithium Ion Battery", the Chinese patent application with the filing No. 201810988377.0, filed on August 28, 2018 with the Chinese Patent Office, entitled "Coating Liquid for Use in Lithium Ion Battery, Lithium Ion Battery Separator, and Lithium Ion Battery", the Chinese patent application with the filing No. 201811015292.0, filed on August 31, 2018 with the Chinese Patent Office, entitled "Coating Liquid for Use in Lithium Ion Battery, Lithium Ion Battery Separator, and Lithium Ion Battery", the Chinese patent application with the filing No. 201811012528.5, filed on August 31, 2018 with the Chinese Patent Office, entitled "Coating Liquid for Use in Lithium Ion Battery, Lithium Ion Battery Separator, and Lithium Ion Battery", and the Chinese patent application with the filing No. 201811014090.4, filed on August 31, 2018 with the Chinese Patent Office, entitled "Coating Liquid for Use in Lithium Ion Battery, Lithium Ion Battery Separator, and Lithium Ion Battery", and the contents of each of the above applications are incorporated herein by reference in entirety.

### Technical Field

The present disclosure relates to the technical field of lithium ion batteries, and in particular, to a coating liquid for a lithium ion battery, a lithium ion battery separator, and a lithium ion battery.

### Background Art

Due to advantages such as large specific energy, high working voltage, long cycle service life, no memory effect, small self-discharging, no contamination and environmental protection, and long cycle life, lithium ion batteries have been widely applied to portable mobile electronic devices, such as mobile phones, video cameras, and notebook computers, and are also listed as candidate power supplies for electric vehicles, aerospace, military and large energy storage devices. With the development of lithium ion batteries, the requirements for battery capacity, high and low temperature resistance, cycle life and so on are getting higher and higher. The lithium ion batteries are a secondary battery widely used at present.

The lithium ion battery is mainly composed of four major materials, including a positive electrode material, a negative electrode material, a separator and an electrolyte. As one of its important components, the separator plays a significant role in its performance.

The battery separator refers to a layer of separator material between a positive electrode and a negative electrode of a battery, and is generally referred to as a battery separator. The main function of the battery separator is to isolate the positive electrode and the negative electrode and disable the electrons in the battery from passing freely, while allowing the ions in the electrolyte to pass freely between the positive and negative electrodes.

The ion conductivity of the battery separator is directly related to the overall performance of the battery. Its function of isolating the positive electrode and the negative electrode can restrict the rising of current in the case of overcharging or temperature rising of the battery, so as to prevent short circuit of the battery to cause explosion, and have the function of microporous self-closing protection, to serve to safely protect the battery user and the device.

Polyolefin materials are widely used as microporous separators due to advantages such as low price, relatively good mechanical strength and chemical stability, good overall performance, and low cost. However, due to the problems of poor thermal stability, poor puncture resistance and poor electrolyte wettability, further application of the polyolefin materials in a battery is limited.

### Summary

The present disclosure provides a coating liquid for a lithium ion battery, a lithium ion battery separator and a lithium ion battery, to better overcome the above problems and defects existing in the prior art. In the present disclosure, the lithium ion battery separator consisting of a separator body and a coating layer loaded on the separator body is obtained by applying a coating liquid that is obtained by mixing a nanowire, ceramic powder, an adhesive and so on onto a surface of the separator body and curing the coating liquid. The lithium ion battery separator has good thermal stability, puncture resistance, electrolyte wettability, mechanical strength etc., which effectively solves the problems of poor thermal stability, poor puncture resistance and poor electrolyte wettability of the existing separator.

The present disclosure provides a coating liquid for a lithium ion battery separator, wherein raw materials of the coating liquid include: a nanowire, ceramic powder, an adhesive and a solvent, wherein
the nanowire is at least one of nano cellulose, carbon nanotube, silver nanowire, boron carbide nanowire, copper hydroxide nanowire, aramid nano fiber, silicon monoxide nanowire and hydroxyapatite nanowire; and the nanowire has a diameter of 1∼100 nm, and a length of 0.1∼100 µm.

In one or more embodiments, the ceramic powder is at least one of aluminum oxide, silicon oxide, titanium oxide, boehmite and attapulgite, and the ceramic powder has a particle size of 5∼1000 nm.

The present disclosure provides a coating liquid for a lithium ion battery separator, wherein raw materials of the coating liquid include: a nanowire, ceramic powder, an adhesive and a solvent, wherein
the nanowire is at least one of nano cellulose, carbon nanotube, silver nanowire, boron carbide nanowire, copper hydroxide nanowire, aramid nano fiber, silicon monoxide nanowire, and hydroxyapatite nanowire; and the nanowire has a diameter of 1∼100 nm, and a length of 0.1∼100 µm; and
the ceramic powder is at least one of aluminum oxide, silicon oxide, titanium oxide, boehmite and attapulgite, and the ceramic powder has a particle size of 5∼1000 nm.

In one or more embodiments, the mass ratio of the ceramic powder to the nanowire is (0.1∼5): 1.

In one or more embodiments, the mass of the nanowire accounts for 1∼30% of the mass of the solvent.

In one or more embodiments, the mass of the adhesive accounts for 1∼50% of the mass of the solvent.

In one or more embodiments, the mass ratio of the ceramic powder to the nanowire is (0.1∼5)-1 ; the mass of the nanowire accounts for 1∼30% of the mass of the solvent; and the mass of the adhesive accounts for 1∼50% of the mass of the solvent.

In one or more embodiments, the raw materials of the coating liquid further include an adjuvant, wherein the mass of the adjuvant accounts for 0.01∼3% of the mass of the solvent.

In one or more embodiments, the adhesive is at least one of polyvinyl alcohol, polyacrylonitrile, polyacrylic acid, styrene-butadiene rubber, carboxymethyl cellulose, polyvinylidene fluoride, polyvinyl pyrrolidone and polyimide.

In one or more embodiments, the solvent includes at least one of water, ethanol, acetone and N-methylpyrrolidone.

In one or more embodiments, the adhesive is at least one of polyvinyl alcohol, polyacrylonitrile, polyacrylic acid, styrene-butadiene rubber, carboxymethyl cellulose, polyvinylidene fluoride, polyvinyl pyrrolidone and polyimide; and the solvent includes at least one of water, ethanol, acetone and N-methylpyrrolidone.

In one or more embodiments, the adjuvant is at least one of fluoroalkyl ethoxy alcohol ether, fatty alcohol polyoxyethylene ether, sodium butylbenzene naphthalene sulfonate, hydroxyethyl sodium sulfate and lauryl sodium sulfate.

The present disclosure further provides a lithium ion battery separator, including a separator body and a coating layer loaded on the separator body, wherein the coating layer is obtained by coating the above coating liquid on at least one side surface of the separator body and curing the coating liquid.

In one or more embodiments, the coating is carried out in a manner of dip coating, spray coating, spin coating or blade coating.

In one or more embodiments, the separator body is a polypropylene microporous film, a polyethylene microporous film or a polypropylene/polyethylene microporous film (wherein the polypropylene/polyethylene microporous film refers to composite film of polypropylene and polyethylene).

In one or more embodiments, the separator body has a thickness of 3∼20 µm.

In one or more embodiments, the separator body is a polypropylene microporous film, a polyethylene microporous film or a polypropylene/polyethylene microporous film; and the separator body has a thickness of 3∼20 µm.

In one or more embodiments, the coating layer has a thickness of 0.01∼1 µm.

The present disclosure further provides a lithium ion battery, wherein the lithium ion battery includes the above lithium ion battery separator.

Compared with the prior art, the beneficial effects of the coating liquid for a lithium ion battery, the lithium ion battery separator and the lithium ion battery of the present disclosure at least include:
in the present disclosure, the lithium ion battery separator consisting of a separator body and a coating layer loaded on the separator body is obtained by applying a coating liquid that is obtained by mixing a nanowire, ceramic powder, an adhesive and so on onto a surface of the separator body and curing the coating liquid. This lithium ion battery separator has good thermal stability, puncture resistance, electrolyte wettability, mechanical strength etc., and effectively solves the problems of poor thermal stability, poor puncture resistance and poor electrolyte wettability of the existing separator; further, the nanowire and the ceramic powder adopted for the coating layer materials of the lithium ion battery separator can avoid a relatively thick coating layer that causes the problem of increased thickness and weight of the whole separator, thus achieving the effects that the lithium ion battery separator has good thermal stability, puncture resistance and electrolyte wettability, and small increase in thickness and weight.

In order to make the above object, features and advantages of the present disclosure more apparent and understandable, preferred embodiments are particularly illustrated below in combination to make following detailed description.

### Detailed Description of Embodiments

In order to facilitate understanding of the present disclosure, the technical solutions of the present disclosure are described in detail below with reference to the examples, and numerous specific details are set forth in the following description to facilitate a sufficient understanding of the present disclosure.

However, the present disclosure can be implemented in many other ways than those described herein, and a person skilled in the art could make similar improvements without departing from the scope of the present disclosure, and therefore the present disclosure is not limited by the specific implementations disclosed below.

Unless otherwise defined, all technical and scientific terms used herein have the same meaning as that generally understood by a person ordinarily skilled in the art. When there is a contradiction, the definition in the present description is taken as a reference.

For example, regarding the terms used herein:
the term "prepared from..." is synonymous with "comprising". The term "comprising", "including", "having", "containing" or any other derivatives thereof, as used herein, are intended to cover non-exclusive inclusion. For example, a composition, step, method, article or apparatus comprising the listed elements is not necessarily only limited to those elements, but may include other elements not explicitly listed or elements inherent to such composition, step, method, article or apparatus.

The conjunction "consisting of..." excludes any unspecified element, step or component. If used in a claim, this phrase will make the claim closed, so that the claim does not contain materials other than those described, but conventional impurities related thereto are excluded. When the phrase "consisting of..." appears in the clause of the claim body rather than immediately after the subject, it only defines the elements described in the clause; and other elements are not excluded from said claim as a whole.

When the amount, concentration, or other values or parameters are expressed in a range, a preferred range, or a series of range defined by an upper preferred limit value and a lower preferred limit value, this should be further understood as specifically disclosing all ranges formed by any pair of an upper value in any range or a preferred value and a lower value of any range or a preferred value, regardless of whether this range is separately disclosed. For example, when the range "1-5" is disclosed, the range described should be interpreted to include the ranges "1∼4", "1∼3", "1∼2", "1-2 and 4-5", "1-3 and 5" etc. When a numerical range is described herein, unless otherwise specified, the range is intended to include its end values and all integers and fractions within this range.

"And/or" is used to mean that one or both the illustrated situations may occur, for example, A and/or B include (A and B) and (A or B).

A coating liquid for a lithium ion battery separator, wherein raw materials of the coating liquid include: a nanowire, ceramic powder, an adhesive and a solvent.

It should be noted that the aspect ratio (i.e. the ratio of the length to the diameter) of the nanowire needs to be greater than 50, for example, the aspect ratio of the nanowire may be 100, 500, 1000, 8000 or 10000; the diameter of the nanowire is 1∼100 nm, such as 1 nm, 5 nm, 10 nm, 20 nm, 30 nm, 50 nm, 80 nm, or 100 nm; and the length of the nanowire is 0.1∼100 µm, such as 0.1 µm, 0.5 µm, 1 µm, 5 µm, 10 µm, 30 µm, 50 µm, 80 µm or 100 µm.

The nanowire is at least one of nano cellulose, carbon nanotube, silver nanowire, boron carbide nanowire, copper hydroxide nanowire, aramid nano fiber, silicon monoxide nanowire and hydroxyapatite nanowire.

The ceramic powder is at least one of aluminum oxide, silicon oxide, titanium oxide, boehmite and attapulgite. The ceramic powder has a particle size of 5∼1000 nm, for example, 5 nm, 10 nm, 50 nm, 80 nm, 100 nm, 300 nm, 500 nm, 800 nm or 1000 nm.

In one or more embodiments, the mass ratio of the ceramic powder to the nanowire is (0.1∼5):1, for example, 0.1:1, 0.5:1, 1:1, 2:1, 3:1, 4:1 or 5:1; the mass of the nanowire accounts for 1∼30% of the mass of the solvent, for example, 1%, 5%, 8%, 10%, 15%, 20%, 25% or 30%; and the mass of the adhesive accounts for 1∼50% of the mass of the solvent, for example, 1%, 5%, 10%, 20%, 30%, 40% or 50%.

In one or more embodiments, the raw materials of the coating liquid further include an adjuvant, wherein the mass of the adjuvant accounts for 0.01∼3% of the mass of the solvent, for example, 0.01%, 0.05%, 0.1%, 0.5%, 1%, 1.5%, 2%, 2.5% or 3%.

It should be noted that, after adding the adjuvant to the raw materials of the coating liquid, the surface tension of the coating liquid on a surface of a base film such as a polyolefin microporous film is improved.

In one or more embodiments, the adhesive is at least one of polyvinyl alcohol, polyacrylonitrile, polyacrylic acid, styrene-butadiene rubber, carboxymethyl cellulose, polyvinylidene fluoride, polyvinyl pyrrolidone and polyimide; and the solvent includes at least one of water, ethanol, acetone and N-methylpyrrolidone.

In one or more embodiments, the adjuvant is at least one of fluoroalkyl ethoxy alcohol ether, fatty alcohol polyoxyethylene ether, sodium butylbenzene naphthalene sulfonate, hydroxyethyl sodium sulfate and lauryl sodium sulfate.

The present disclosure further provides a method for preparing a coating liquid, wherein the coating liquid is the above coating liquid, and the preparation method includes: mixing respective raw materials uniformly.

In one or more embodiments, the preparation method includes: first dispersing a long nanowire and a short nanowire in a solvent, after stirring or ultrasonically mixing them uniformly, adding an adhesive, and continuing to stir or ultrasonically mix them uniformly, to obtain the coating liquid. Further, an adjuvant may be added after adding the adhesive.

The present disclosure further provides a lithium ion battery separator, including a separator body and a coating layer loaded on the separator body, wherein the coating layer is obtained by coating the above coating liquid on at least one side surface of the separator body and curing the coating liquid.

In one or more embodiments, the coating may be carried out in a manner of dip coating, spray coating, spin coating, roller coating or blade coating etc. The curing may be carried out in a manner of radiation curing or UV curing or curing by heating and drying in an oven. Preferably, the curing temperature is 40 °C∼100 °C, for example, 40 °C, 50 °C, 60 °C, 70 °C, 80 °C, 90 °C or 100 °C, and the curing time is 5-120 s, for example, 5 s, 10 s, 30 s, 50 s, 80 s, 100 s or 120 s.

It should be noted that, the above coating layer may be obtained by coating the coating liquid on a single side surface (a surface facing a certain electrode) of the separator body or on both side surfaces (two surfaces facing electrodes at two sides) of the separator body, and then curing the coating liquid, depending on actual needs.

In one or more embodiments, the separator body is a polypropylene microporous film, a polyethylene microporous film or a polypropylene/polyethylene microporous film. It should be noted that the above polypropylene microporous film, polyethylene microporous film or polypropylene/polyethylene microporous film are all commercially available products, for example, they may be manufactured by a dry stretching process.

In one or more embodiments, the separator body has a thickness of 3∼20 µm, for example, 3 µm, 5 µm, 8 µm, 10 µm, 12 µm, 15 µm, 18 µm or 20 µm.

In one or more embodiments, the coating layer has a thickness of 0.01∼1 µm, for example, 0.01 µm, 0.05 µm, 0.08 µm, 0.1 µm, 0.3 µm, 0.5 µm, 0.8 µm or 1 µm.

It should be noted that, the nanowire in the coating liquid forms a main skeleton of the coating layer, so that the separator has good mechanical strength, and the separator further has good puncture resistance and electrolyte wettability by compounding the ceramic powder.

In the present disclosure, the lithium ion battery separator consisting of a separator body and a coating layer loaded on the separator body is obtained by applying a coating liquid that is obtained by mixing a nanowire, ceramic powder, an adhesive and so on onto a surface of the separator body and curing the coating liquid. This lithium ion battery separator has good thermal stability, puncture resistance, electrolyte wettability, mechanical strength etc., and effectively solves the problems of poor thermal stability, poor puncture resistance and poor electrolyte wettability of the existing separator; further, the nanowire and the ceramic powder adopted for the coating layer materials of the lithium ion battery separator can avoid a relatively thick coating layer that causes the problem of increased thickness and weight of the whole separator, thus achieving the effects that the lithium ion battery separator has good thermal stability, puncture resistance and electrolyte wettability, and small increase in thickness and weight.

The present disclosure further provides a lithium ion battery, wherein the lithium ion battery includes the above lithium ion battery separator.

In order to facilitate understanding of the present disclosure, the technical solutions of the present disclosure are further described below in connection with examples. The applicant states that the present disclosure illustrates the detailed process equipment and process flow of the present disclosure through the following examples, but the present disclosure is not limited to the above detailed process equipment and process flow, that is, it does not mean that the present disclosure should be implemented relying upon the following detailed process equipment and process flow. Those skilled in the art should know that any improvement on the present disclosure, equivalent substitutions of raw materials and addition of auxiliary components of products of the present disclosure, selection of specific modes, etc., are included in the scope of protection and the scope of disclosure of the present disclosure.

### Example

### Example 1

(1) 27 parts of ceramic powder and 30 parts of nanowire were dispersed in 100 parts of ethanol, after stirring and mixing them uniformly, 50 parts of styrene-butadiene rubber was added to the mixed liquid, and the resultant continued to be stirred and mixed uniformly to obtain a coating liquid, wherein the nanowire was a carbon nanotube having a diameter of 1∼100 nm and a length of 0.1∼100 µm, and the ceramic powder was attapulgite having a particle diameter of 100 nm.
(2) The coating liquid prepared in step (1) was uniformly coated on one side surface of a polyethylene microporous film by means of spray coating, and then cured at a temperature of 70 °C for 50 s, and then cooled to room temperature to obtain a lithium ion battery separator composed of a polyethylene microporous film and a coating layer loaded on a surface of the polyethylene microporous film, wherein a thickness of the polyethylene microporous film was 20 µm, and a thickness of the coating layer was 0.05 µm.

### Example 2

(1) 7.5 parts of ceramic powder and 15 parts of nanowire were dispersed in 100 parts of ethanol, after stirring and mixing them uniformly, 25 parts of polyvinyl alcohol was added to the mixed liquid, and the resultant continued to be stirred and mixed uniformly to obtain a coating liquid, wherein the nanowire was nano cellulose having a diameter of 1∼100 nm and a length of 0.1∼100 µm, and the ceramic powder was aluminum oxide having a particle diameter of 500 nm.
(2) The coating liquid prepared in step (1) was uniformly coated on one side surface of a polyethylene microporous film by means of spray coating, and then cured at a temperature of 40 °C for 120 s, and then cooled to room temperature to obtain a lithium ion battery separator composed of a polyethylene microporous film and a coating layer loaded on a surface of the polyethylene microporous film, wherein a thickness of the polyethylene microporous film was 10 µm, and a thickness of the coating layer was 0.3 µm.

### Example 3

(1) 1 part of long nanowire and 10 parts of short nanowire were dispersed in 200 parts of ethanol, after stirring and mixing them uniformly, 15 parts of polyvinyl alcohol was added to the mixed liquid, and the resultant continued to be stirred and mixed uniformly to obtain a coating liquid, wherein the nanowire was a hydroxyapatite nanowire having a diameter of 1∼100 nm and a length of 0.1∼100 µm, and the ceramic powder was aluminum oxide having a particle diameter of 1000 nm.
(2) The coating liquid prepared in step (1) was uniformly coated on one side surface of a polyethylene microporous film by means of spray coating, and then cured at a temperature of 90 °C for 10 s, and then cooled to room temperature to obtain a lithium ion battery separator composed of a polyethylene microporous film and a coating layer loaded on a surface of the polyethylene microporous film, wherein a thickness of the polyethylene microporous film was 5 µm, and a thickness of the coating layer was 1 µm.

### Example 4

(1) 2 parts of ceramic powder and 10 parts of nanowire were dispersed in 100 parts of ethanol, after stirring and mixing them uniformly, 12 parts of polyvinyl alcohol and 0.1 parts of lauryl sodium sulfate were added to the mixed liquid, and the resultant continued to be stirred and mixed uniformly to obtain a coating liquid, wherein the nanowire was carbon nanotube having a diameter of 1∼100 nm and a length of 0.1∼100 µm, and the ceramic powder was attapulgite having a particle diameter of 200 nm.
(2) The coating liquid prepared in step (1) was uniformly coated on one side surface of a polyethylene microporous film by means of spray coating, and then cured at a temperature of 60 °C for 80 s, and then cooled to room temperature to obtain a lithium ion battery separator composed of a polyethylene microporous film and a coating layer loaded on a surface of the polyethylene microporous film, wherein a thickness of the polyethylene microporous film was 8 µm, and a thickness of the coating layer was 0.5 µm.

### Example 5

(1) 6 parts of ceramic powder and 10 parts of nanowire were dispersed in 50 parts of ethanol, after stirring and mixing them uniformly, 15 parts of polyvinyl alcohol and 0.5 parts of lauryl sodium sulfate was added to the mixed liquid, and the resultant continued to be stirred and mixed uniformly to obtain a coating liquid, wherein the nanowire was carbon nanotube having a diameter of 1∼100 nm and a length of 0.1∼100 µm, and the ceramic powder was attapulgite having a particle diameter of 300 nm.
(2) The coating liquid prepared in step (1) was uniformly coated on one side surface of a polyethylene microporous film by means of spray coating, and then cured at a temperature of 80 °C for 30 s, and then cooled to room temperature to obtain a lithium ion battery separator composed of a polyethylene microporous film and a coating layer loaded on a surface of the polyethylene microporous film, wherein a thickness of the polyethylene microporous film was 12 µm, and a thickness of the coating layer was 0.1 µm.

### Example 6

(1) 8 parts of ceramic powder and 10 parts of nanowire were dispersed in 40 parts of ethanol, after stirring and mixing them uniformly, 16 parts of adhesive and 1.2 parts of lauryl sodium sulfate were added to the mixed liquid, and the resultant continued to be stirred and mixed uniformly to obtain a coating liquid, wherein the nanowire was carbon nanotube having a diameter of 1∼100 nm and a length of 0.1∼100 µm, and the ceramic powder was attapulgite having a particle diameter of 600 nm.
(2) The coating liquid prepared in step (1) was uniformly coated on one side surface of a polyethylene microporous film by means of spray coating, and then cured at a temperature of 50 °C for 100 s, and then cooled to room temperature to obtain a lithium ion battery separator composed of a polyethylene microporous film and a coating layer loaded on a surface of the polyethylene microporous film, wherein a thickness of the polyethylene microporous film was 18 µm, and a thickness of the coating layer was 0.05 µm.

### Example 7

The present example is different from Example 4 in that 4 parts of ceramic powder and 10 parts of nanowire are dispersed in 100 parts of ethanol, and the others are the same as in Example 4.

### Example 8

The present example is different from Example 4 in that 6 parts of ceramic powder and 10 parts of nanowire are dispersed in 100 parts of ethanol, and the others are the same as in Example 4.

### Example 9

The present example is different from Example 4 in that 8 parts of ceramic powder and 10 parts of nanowire are dispersed in 100 parts of ethanol, and the others are the same as in Example 4.

### Example 10

The present example is different from Example 4 in that 3 parts of ceramic powder and 15 parts of nanowire are dispersed in 100 parts of ethanol, and the others are the same as in Example 4.

### Example 11

The present example is different from Example 4 in that 4 parts of ceramic powder and 20 parts of nanowire are dispersed in 100 parts of ethanol, and the others are the same as in Example 4.

### Example 12

The present example is different from Example 4 in that 6 parts of ceramic powder and 30 parts of nanowire are dispersed in 100 parts of ethanol, and the others are the same as in Example 4.

The lithium ion battery separators prepared in Examples 1∼12 above were tested for thermal stability, puncture strength and contact angle on the surface of the coating layer thereof, and lithium ion batteries were prepared using the lithium ion battery separators prepared in Examples 1∼12 above, and their electrical properties were detected. Detection results are as shown in Table 1 below.

In the above, the thermal stability of the separator was measured according to the standard GB/T 21650.1-2008; and
the puncture strength was measured according to the standard GB/T 36363-2018.

**Table 1**

| Type | Polyethylene Microporous Film Thickness (µm) | Coating Layer Thickness (µm) | Separator Thermal Stability (150 °C, 1 h) | Puncture Strength (gf) | Contact Angle (°) | Retention Rate of Battery Capacity (%) |
|---|---|---|---|---|---|---|
| Example 1 | 20 | 0.05 | TD 0 | 416 | 8 | 99.5 |
| | | | MD 0.1% | | | |
| Example 2 | 10 | 0.3 | TD 0 | 428 | 10 | 99 |
| | | | MD 0.5% | | | |
| Example 3 | 5 | 1 | TD 0 | 400 | 12 | 99.2 |
| | | | MD 0.1% | | | |
| Example 4 | 8 | 0.5 | TD 0 | 438 | 1 | 99.7 |
| | | | MD 0 | | | |
| Example 5 | 12 | 0.1 | TD 0 | 418 | 3 | 99.1 |
| | | | MD 0.1% | | | |
| Example 6 | 18 | 0.05 | TD 0 | 465 | 5 | 99.3 |
| | | | MD 0.01% | | | |
| Example 7 | 8 | 0.5 | TD 0 | 419 | 1 | 99 |
| | | | MD 0 | | | |
| Example 8 | 8 | 0.5 | TD 0 | 441 | 0 | 99 |
| | | | MD 0 | | | |
| Example 9 | 8 | 0.5 | TD 0 | 432 | 0 | 99.4 |
| | | | MD 0 | | | |
| Example 10 | 8 | 0.5 | TD 0 | 416 | 1 | 99.1 |
| | | | MD0 | | | |
| Example 11 | 8 | 0.5 | TD 0 | 425 | 4 | 99.3 |
| | | | MD 0.1% | | | |
| Example 12 | 8 | 0.5 | TD 0 | 420 | 5 | 99.2 |
| | | | MD 0.05% | | | |
| Comparative Example 1 | 20 | 4 | TD 8% | 520 | 4 | 91 |
| | | | MD 10% | | | |
| Comparative Example 2 | 12 | 2 | TD 12% | 480 | 5 | 90.5 |
| | | | MD 15% | | | |
| Comparative Example 3 | 8 | 0 | TD 25% | 400 | 42 | 85 |
| | | | MD 33% | | | |

In Table 1, the batteries in Examples 1∼12 and Comparative Examples 1∼3 have the same main structure, including a positive electrode, a negative electrode, an electrolyte and a separator, wherein the lithium ion battery separators in Comparative Examples 1∼2 are different from those in Examples 1∼12 in that the coating layer is thicker; the lithium ion battery separator in Comparative Example 3 adopts a polyethylene microporous film and is not loaded with a substance for forming the coating layer. It should be noted that the above polyethylene microporous film is a commercially available product.

It can be seen from Table 1 above that, in the coating liquids prepared in Examples 1∼12, as the adjuvant is added, the contact angle of the coating layer surface of each obtained lithium ion battery separator is smaller than the contact angle of the surface of the lithium ion battery separator in Comparative Example 3; the contact angle of the coating layer surface of the lithium ion battery separator obtained by adding an adjuvant to the coating liquid prepared in Examples 4∼12 is smaller than the contact angle of the coating layer surface of the lithium ion battery separator prepared in Examples 1∼3. It should be noted that the same effect as the above can be achieved when the adjuvant in the coating liquid prepared in Examples 4∼12 is replaced with at least one of fluoroalkyl ethoxy alcohol ether, fatty alcohol polyoxyethylene ether, sodium butylbenzene naphthalene sulfonate and hydroxyethyl sodium sulfate.

In summary, the lithium ion battery separator provided in the examples of the present disclosure is significantly improved in the thermal stability, the puncture resistance and the wettability of the electrolyte, and meanwhile the retention rate of the battery capacity of the battery is improved to a certain extent.

It should be additionally explained that the same effect as the above can be achieved when the separator body in the above Examples 1∼12 and Comparative Examples 1∼3 is replaced with a polypropylene microporous film or a polypropylene/polyethylene microporous film.

The above-mentioned are merely for preferred examples of the present disclosure and not intended to limit the present disclosure, and for one skilled in the art, various modifications and variations may be made to the formulation and preparation process of the present disclosure. Any modifications, equivalent substitutions, improvements and the like made within the spirit and principle of the present disclosure are intended to be included within the protection scope of the present disclosure.

### Industrial Applicability

The lithium ion battery separator in the present disclosure has good thermal stability, puncture resistance, electrolyte wettability, mechanical strength etc., and effectively solves the problems of poor thermal stability, poor puncture resistance and poor electrolyte wettability of the existing separator; further, the nanowire and the ceramic powder adopted for the coating layer materials of the lithium ion battery separator can avoid a relatively thick coating layer that causes the problem of increased thickness and weight of the whole separator, thus achieving the effects that the lithium ion battery separator has good thermal stability, puncture resistance and electrolyte wettability, and small increase in thickness and weight.

## Claims

1. A coating liquid for a lithium ion battery separator, **characterized in that** the coating liquid comprises: a nanowire, ceramic powder, an adhesive and a solvent,
wherein the nanowire is at least one selected from the group consisting of nano cellulose, carbon nanotube, silver nanowire, boron carbide nanowire, copper hydroxide nanowire, aramid nano fiber, silicon monoxide nanowire and hydroxyapatite nanowire; and the nanowire has a diameter of 1∼100 nm, and a length of 0.1∼100 µm.

2. The coating liquid for a lithium ion battery separator according to claim 1, wherein the ceramic powder is at least one selected from the group consisting of aluminum oxide, silicon oxide, titanium oxide, boehmite and attapulgite, and the ceramic powder has a particle size of 5∼1000 nm.

3. The coating liquid for a lithium ion battery separator according to claim 1 or 2, wherein a mass ratio of the ceramic powder to the nanowire is 0.1:1∼5:1.

4. The coating liquid for a lithium ion battery separator according to any one of claims 1-3, wherein a mass of the nanowire accounts for 1∼30% of a mass of the solvent.

5. The coating liquid for a lithium ion battery separator according to any one of claims 1-4, wherein a mass of the adhesive accounts for 1∼50% of a mass of the solvent.

6. The coating liquid for a lithium ion battery separator according to any one of claims 1-5, wherein raw materials of the coating liquid further comprise an adjuvant, wherein a mass of the adjuvant accounts for 0.01∼3% of a mass of the solvent.

7. The coating liquid for a lithium ion battery separator according to any one of claims 1-6, wherein the adhesive is at least one selected from the group consisting of polyvinyl alcohol, polyacrylonitrile, polyacrylic acid, styrene-butadiene rubber, carboxymethyl cellulose, polyvinylidene fluoride, polyvinyl pyrrolidone and polyimide.

8. The coating liquid for a lithium ion battery separator according to any one of claims 1-7, wherein the solvent comprises at least one selected from the group consisting of water, ethanol, acetone and N-methylpyrrolidone.

9. The coating liquid for a lithium ion battery separator according to claim 6, wherein the adjuvant is at least one selected from the group consisting of fluoroalkyl ethoxy alcohol ether, fatty alcohol polyoxyethylene ether, sodium butylbenzene naphthalene sulfonate, hydroxyethyl sodium sulfate and lauryl sodium sulfate.

10. A lithium ion battery separator, **characterized by** comprising a separator body and a coating layer loaded on the separator body, wherein the coating layer is obtained by coating the coating liquid according to any one of claims 1-9 on at least one side surface of the separator body, and curing the coating liquid.

11. The lithium ion battery separator according to claim 10, wherein the coating is carried out in a manner of dip coating, spray coating, spin coating, roller coating or blade coating.

12. The lithium ion battery separator according to claim 10 or 11, wherein the separator body is a polypropylene microporous film, a polyethylene microporous film or a polypropylene/polyethylene microporous film.

13. The lithium ion battery separator according to any one of claims 10-12, wherein the separator body has a thickness of 3∼20 µm.

14. The lithium ion battery separator according to any one of claims 10-13, wherein the coating layer has a thickness of 0.01∼1 µm.

15. A lithium ion battery, **characterized in that** the lithium ion battery comprises the lithium ion battery separator according to any one of claims 10∼14.
